# EUROPEAN PATENT APPLICATION

(11) **EP 1 854 835 A1**
(43) Date of publication of application: **14.11.2007**
(21) Application number: 07010072.2
(22) Date of filing: 01.11.2002
(51) Int. Cl.: C08J 9/00, C08J 9/10, C08J 9/04, C08L 27/06

(54) **A method of making extruded shapes**

(30) Priority: 02.11.2001 US 1730
(62) Divisional of application: 02802823.1
(71) Applicant: Veka, Inc., Fombell, PA 16123 (US)
(72) Inventor: Seiling, Kevin A., Monaco, PA 15051 (US); Sheppeck, Jason C., Chicora, PA 16025 (US)
(74) Representative: Müller-Boré & Partner Patentanwälte

(57) **Abstract**

The present invention relates to a method of making an extruded shape wherein said method comprises the steps of:
blending polyvinyl chloride with glass fibers to make a polyvinyl chloride/glass melt in which the glass fibers are imbedded in the polyvinyl chloride wherein the concentration of said glass fiber is in the range of 1% to 18% by weight;
exposing the polyvinyl chloride/glass melt to a blowing agent to form voids in the polyvinyl chloride/glass melt; and
extruding the polyvinyl chloride/glass melt having included voids to form an extruded shape.

## Description

### BACKGROUND OF THE INVENTION

### Field of the Invention

The presently disclosed invention relates to compositions and methods for making composite construction materials.

### Description of the Prior Art

For many years wood has been the material of choice for certain structural applications such as decks and porches. However, wood has a major disadvantage in that it is subject to attack from mold, mildew, fungus and insects. Protection from these causes is usually afforded by protective coatings or by treatment with chemicals or metals such as arsenic. However, these protective methods have the disadvantage of requiring periodic maintenance or employing the use of human toxins.

In addition, wood is also subject to color changes as a result of exposure to sunlight or natural elements. In some applications, such as outdoor decks, such reactivity manifests in various ways such as color spots under furniture or mats as well as other undesirable respects.

To avoid these difficulties, in some cases metal materials have been used in prior art construction, as an alternative to wood. Metal materials are impervious to fungus and insect hazards, but they are subject to corrosion processes. In addition, the weight and/or cost of metal materials makes them unsuitable for a number of applications.

To overcome these difficulties, various substitutes for wood decking planks and similar structural members have been developed in the prior art. As an example, U.S. Patent 5,660,016 to Erwin discloses decking plank that is composed of an extruded polyvinyl chloride outer shell that is filled with a rigid polyurethane foam core. As another example, U.S. Patent 6,128,880 to Meenan describes a modular decking system wherein various system components are designed for interlocking or cooperative assembly. However, such specialty systems have often required special features such as attachment systems for securing the planks. Other improvements in composite decking have been directed to ornamental features, such as shown in U.S. Design Patent Des. 418,926.

In some processes for making composite members, a vinyl polymer is used in combination with wood elements. For example, U.S. Patents 2,926,729 and 3,432,885 describe thermoplastic polyvinyl chloride cladding that is combined with wood members to form architectural components. According to other technology, a thermoplastic resin layer can be bonded to a thermoset resin layer. For example, in U. S. Patent 5,074,770 a vacuum formed preform is treated to modify the-polymeric structure of the resin surface and improve adhesion with a thermoplastic resin layer. Processes such as described in U.S. Patent 5,098,496 to Breitigam for making articles from heat curable thermosetting polymer compositions are also known in the prior art.

In other cases, vinyl polymeric materials have been comprised of a vinyl polymer in combination with one or more additives. Both rigid and flexible thermoplastic materials have been formed into structural materials by extrusion and injection molding processes. In some cases, these materials have also included fiber, inorganic materials, dye and other additives. Examples of thermoplastic polyvinyl chloride and wood fiber blended to make a composite material are found in U.S. Patents 5,486,553; 5,539,027; 5,406,768; 5,497,594; 5,441,801; and 5,518,677.

In some instances, foamed material has also been used to make structural members. Foamed thermoplastics are typically made by dispersing or expanding a gaseous phase throughout a liquid polymer phase to create a foam comprising a polymer component and an included gas component in a closed or open structure. The gaseous phase is produced by blowing agents. Such blowing agents can be chemical blowing agents or physical blowing agents. For example, U.S. Patent 5,001,005 to Blaupied discloses foamed core laminated panels wherein a foamed core, such as a thermosetting plastic foam, is provided with flat rigid sheets or webbed flexible facer sheets. The facer sheets are formed of various materials such as glass fibers bonded with resin binders. Other facer materials include paper, plastic, aluminum foil, metal, rubber and wood.

In some cases, processes have been applied in particular to the manufacture of structural components from foamed thermoplastic polymer and wood fibers. One example is shown in U.S. Patent 6,054,207. Other improvements to foam-filled extruded plastic decking plank have been directed to functional features such as the non-slip surface coating of grit material on acrylic paint that is described in U.S. Patent 5,713,165 to Erwin.

However, in the prior art it has not been known to use a foamed polymer material, particularly polyvinyl chloride, in combination with a glass fiber. As further described in connection with the presently preferred embodiment, it has been found that this combination of foamed polymer and glass fiber affords a material with properties that are especially suited for use as a wood substitute in structural applications. Among other advantages, the material has been found to be highly weatherable in that it resists fading or color change due to exposure to sunlight or environmental element. In addition, the material has been found to have a low coefficient of thermal expansion, a high modulus (bending strength), and high resistance to cracking.

### SUMMARY OF THE INVENTION

In accordance with the subject invention, a composition for use in extruded structural components includes a thermoplastic polymer material that is homogeneously imbedded with glass fibers. The composition further includes internal closed cells or voids. Preferably, the composition includes glass fibers in the amount of 1% to 18% by weight and thermoplastic polymer material in the amount of 82% to 99% by weight. Also preferably, the thermoplastic material is polyvinyl chloride having closed voids or cells therein, which voids or cells, in the aggregate, include between 30% to 70% of the volume of the material. Also preferably, the composition has a specific gravity in the range of 0.5 to 1.0.

Also in accordance with the presently disclosed invention, a method for making a structural shape includes the steps of combining a thermoplastic polymer material with glass fibers as ingredients to form a homogeneous feed material. The thermoplastic polymer material in the feed material is then liquified and blended with the glass fibers to form a thermoplastic/glass melt wherein the concentration of glass fibers is in the range of 1% to 18% by weight. The thermoplastic/glass melt is exposed to a blowing agent that cooperates with the thermoplastic/glass melt to form closed cells in the melt. The thermoplastic/glass melt is then extruded through a die to produce a length of a structural member with a cross-section that defines a predetermined profile.

Preferably, the method for making the structural shape further includes mixing a blowing agent with the thermoplastic material and the glass fibers to form a homogenous feed material, said blowing agent thereafter chemically reacting in response to increased temperature of the thermoplastic/glass melt to release gases that combine with the melt to form the closed cells therein. Also preferably, the chemically reacting blowing agent is selected from the group consisting of azodicarbonamide, citric acid and sodium bicarbonate.

Alternatively, the method includes mixing a blowing agent with the thermoplastic/glass melt to physically form closed cells in the melt. In this case, the physical blowing agent can be used alone or in combination with a chemical blowing agent. Preferably, the physical blowing agent is selected from the group consisting of nitrogen, carbon dioxide, butane, and chloroflorocarbon.

More preferably, the composition that is made according to such method includes a thermoplastic material of polyvinyl chloride in an amount of 82% to 99% by weight and glass fibers in an amount of 1% to 18% by weight. Most preferably, the glass fibers have a screen size in the range of 1/64 inch to ¼ inch; a fiber diameter in the range of 5 microns to 30 microns; and a fiber length in the range of 50 microns to 900 microns.

Other features, advantages, and objects of the presently disclosed invention will become apparent to those skilled in the art as a description of a presently preferred embodiment thereof proceeds.

### BRIEF DESCRIPTION OF THE DRAWINGS

Presently preferred embodiments of the disclosed invention are shown and described in connection with the accompanying Figures wherein:
Figure 1 is a schematic diagram that illustrates a preferred embodiment of the process for making the disclosed composition;
Figure 2 is a cross-section of the extruder illustrated in Figure 1 at the location indicated by lines 2-2 in Figure 1;
Figure 3 is a schematic diagram that illustrates another preferred embodiment of the process for making the disclosed composition; and
Figure 4 is a diagram of gas injection apparatus that is used in combination with the extruder that is illustrated in Figure 3.

### DESCRIPTION OF A PREFERRED EMBODIMENT OF THE INVENTION

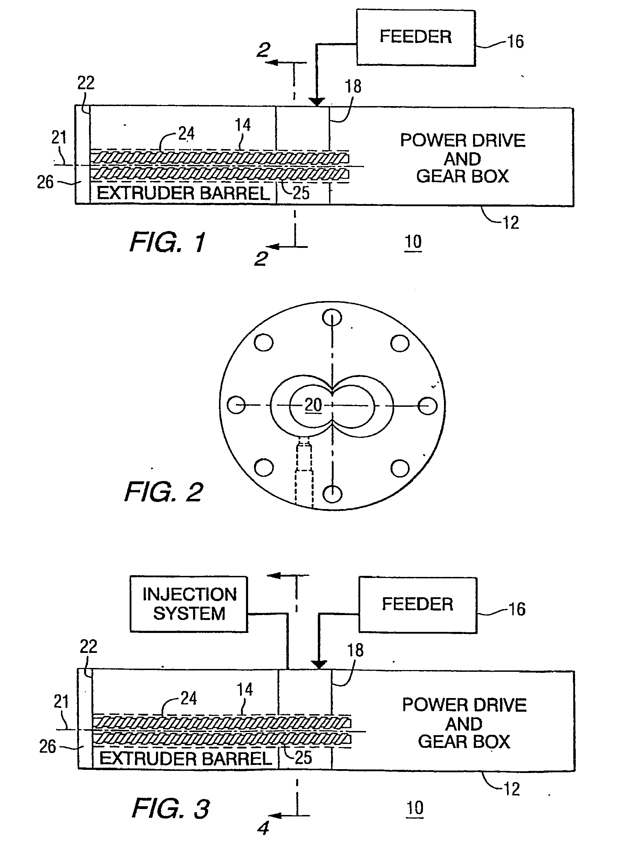

As shown in Figure 1, an extruder 10 includes a power drive and gear box 12 that is mechanically coupled to an extruder barrel 14. Extruder 10 further includes a feeder 16. Preferably, extruder 10 is a conical twin screw extruder of the type such as is available from Milacron, Inc. or equivalent. However, commercially available single screw or parallel twin screws extruders can also be used in the practice of the disclosed invention.

As well known to those skilled in the relevant art, in such commercially available extruders the feed material flows from the feeder 16 to the input end 18 of the barrel 14. According to the preferred embodiment of Figures 1 and 2, barrel 14 defines an internal tapered chamber 20 that is aligned along a longitudinal axis 21 that extends between the input end 18 and the output end 22 of barrel 14. In the preferred embodiment of Figures 1 and 2, extruder 10 is a conical twin screw extruder so that the cross-sectional area of chamber 20 decreases along longitudinal axis 21 at longitudinal positions along axis 21 moving in the direction away from the input end 18 and toward the output end 22. Extruder 10 further includes screws 24 and 25 (Figure 1 only) that are located in the tapered chamber 20 and are mechanically coupled to the gear box 12.

As is also well known to those skilled in the relevant art, when the gear box is powered, it causes extruder screws 24 and 25 to rotate in chamber 20 as feed material is supplied from feeder 16 to the input end 18 of barrel 14. The rotation of extruder screws 24 and 25 carries the feed material through chamber 20 in the direction toward the output end 22 of barrel 14. A die 26 having a die port with a selected perimeter profile is connected to the barrel 14 at output end 22. As the feed material passes from the input end 18 to the output end 22 of barrel 14, the cross-sectional area of the chamber 20 decreases and the feed material is compressed. The compression and frictional forces on the feed material cause the pressure and the temperature of the feed material to increase. At some point in chamber 20 of the barrel 14 between input end 18 and output end 22, the temperature is elevated to the point that feed material forms a fluid melt. At end 22 of barrel 14, the fluid melt is forced through the port of the die 26 to produce an extruded length. The extruded length of material has a cross-sectional profile in the direction normal to the longitudinal axis 21 that corresponds to the profile of the die port in die 26.

In accordance with the presently disclosed invention, the feed material includes, as ingredients, a thermoplastic polymer material and glass fibers. As herein disclosed, the thermoplastic polymer material is selected from the group consisting of polyvinyl chloride, polyethylene, and polypropylene. Preferably, the thermoplastic polymer material is polyvinyl chloride beads because polyvinyl chloride has been found to result in a composition that is highly weatherable. The polyvinyl chloride and glass fibers are combined by mixing them together or by blending them together in feeder 16 as the material flows from feeder 16 to the input end 18 of barrel 14. In either case, the polyvinyl chloride and glass fibers form a feed mixture that is fed into barrel 14 at input end 18.

Inside barrel 14, screws 24 and 25 convey the feed mixture through chamber 20 in the general direction along axis 21 away from input end 18 and toward output end 22. As the feed mixture passes through chamber 20, the polyvinyl chloride/glass fiber mixture is compressed. The increasing temperature of the feed mixture in the extruder barrel 14 causes the polyvinyl chloride to melt or liquify and combine with the glass fibers to form a thermoplastic/glass melt of polyvinyl chloride that is imbedded with glass fibers. The thermoplastic/glass melt or polyvinyl chloride/glass melt is thereafter extruded through the die port of die 26 to form a member having the selected cross-sectional profile.

It has been found that if the glass fibers that are used in the feed mixture have parameters within selected ranges, the extruded product will have a relatively high modulus, i.e. a greater bending strength. Such composition is particularly useful in certain applications such as outdoor decking wherein the extruded product will be exposed to relatively high shear loading. In accordance with the disclosed invention, the glass fibers have the following parameters: screen size 1/64 in. to ¼ in.; fiber diameter 5 µ to 30 µ; fiber length 50 µ to 900 µ; and bulk density of 0.275 grams/cc to 1.05 grams/cc (where µ symbolizes microns).

Figures 1 and 2 illustrate a preferred embodiment of the disclosed invention in which a chemical blowing agent is used as a feed mixture ingredient in combination with the thermoplastic polymer material and the glass fiber. The chemical blowing agent is a foaming agent that is mixed with the thermal plastic material and glass fiber as a component of the feed mixture. The chemical blowing agent can be mixed with the polymer material and glass fibers to form a feed mixture, or it can be blended together with the polymer and glass as those materials are fed from feeder 16 to the extruder feed input.

In the embodiment of Figures 1 and 2, as the extruder screws 24 and 25 convey the feed material from the input end 18 of chamber 20 to the output end 22, the chemical blowing agent reacts chemically in response to the increase in temperature and pressure in the chamber 20 of the extruder barrel 14. The chemical reaction of the blowing agent produces reactant gases that mix with the thermoplastic/glass melt to form closed internal cells in the thermoplastic/glass melt. In the preferred embodiment, the closed cells define voids in the composition which voids compose in the range of 30% to 70% of the volume that is defined within the surface of the finished composite member. The closed cells formed by the chemical blowing agent reduce the density of the thermoplastic/glass melt and, thereafter, also reduce the density of the extruded shape. Preferably, the specific gravity of the composite material is in the range of 0.5 to 1.0.

Chemical blowing agents such as described herein can be of either an exothermic or endothermic type. The exothermic blowing agent creates heat as it decomposes. A preferred example of an exothermic blowing agent in accordance with the invention herein disclosed is azodicarbonamide. When sufficiently heated, azodicarbonamide decomposes to nitrogen carbon dioxide, carbon monoxide, and ammonia. The endothermic blowing agent absorbs heat as it decomposes. Examples of a preferred endothermic blowing agent in accordance with the presently disclosed invention are sodium bicarbonate and citric acid. Also, the endothermic and exothermic blowing agents can be used in combination. For example, azodicarbonamide can be combined with citric acid and with sodium bicarbonate.

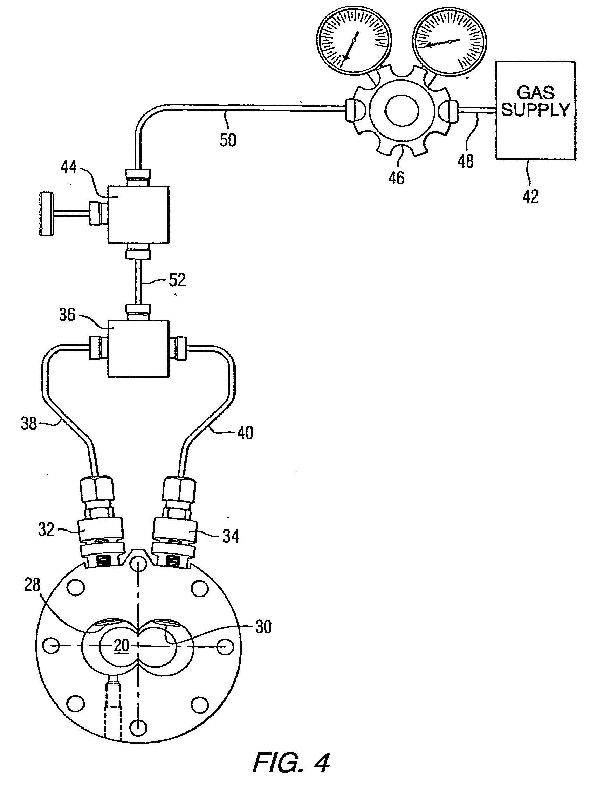

In the presently disclosed embodiment of Figures 3 and 4, the barrel is further provided with injection ports 28 and 30. Injection ports 28 and 30 are used to introduce a physical blowing agent that is intended to reduce the density of the melt as is more specifically described herein. As shown in Figures 3 and 4, the blowing agent is introduced through the extruder barrel and the injector assembly into the melt. In some extruding applications, increased pressure and temperature of the thermoplastic material causes off gases to be produced at the end 22 of extruder barrel 14. Vents are sometimes provided in the extruder barrel for the purpose of establishing a decompression zone for releasing unwanted gasses. However, in the embodiment that is illustrated in Figures 3 and 4, there is no decompression zone.

Similarly to the chemical blowing agent, the physical blowing agent causes the melt to incorporate, internal, closed cell structures in the liquid melt. In accordance with the preferred embodiment of Figures 3 and 4, the blowing agent is of the type that is a physical blowing agent that is a gas. The physical blowing agent is injected through the injection system that is illustrated in Figure 4 and through the extruder barrel 14 into the thermoplastic/glass melt. In accordance with the preferred embodiment, the physical blowing agent can be a pressurized gas such as nitrogen, carbon dioxide, fractional butanes, or chlorofluorocarbons. The gas delivery pressure must be greater than the melt pressure. Typical injection pressures are in the range of about 2,000 to 4,000 psi. The physical mixing takes place in the area of internal chamber 20 between the injector ports 28 and 30 and the die 26.

The injector assembly shown in Figure 4 includes two nozzles 32 and 34 that are connected to a tee 36 by lines 38 and 40. Tee 36 is connected to a pressurized gas supply 42 through a control valve 44, a regulator 46, and lines 48, 50 and 52. In the operation of the injector assembly, a physical blowing agent of pressured gas is injected at pressure that is relatively higher than the pressure in internal chamber 20 at the location of nozzles 32 and 34. Typically, the injection pressure is in the range of 2000 to 6000 psi. The gas blowing agent flows from the gas supply 42 through regulator 46, control valve 44, tee 36 and lines 38 and 40 to nozzles 32 and 34. The gas blowing agent flows from nozzles 32 and 34 into the chamber 20 of the extruder 10 and mixes therein with the liquid polymer or melt. When mixed with the injected gas, the polymer forms internal closed cells. As with the chemical blowing agent, the physical blowing agent is exposed to the melt and results in closed cell voids that compose in the range of 30% to 70% by volume of the total melt. Specific gravity of the melt is in the range of 0.5 to 1.0. This closed cell structure results in a lower density of the melt as well as a lower density of the extruded material after the melt is extruded through die 26 to produce a lineal product having a profile that corresponds to the shape of the die port in die 26.

Alternatively, chemical blowing agents as herein disclosed in connection with Figures 1 and 2 can be used in combination with physical blowing agents as disclosed in connection with Figures 3 and 4.

The combination of the polyvinyl chloride/glass melt in the presence of a blowing agent has been found to result in a composite extrusion that is weatherable and that is of appropriate density to use as a substitute for lumber in applications such as outdoor decking. Furthermore, it is believed that due to the use of the glass fibers, the disclosed composition has a high modulus and a low coefficient of thermal expansion. The closed cell extruded composition of glass fibers and polyvinyl chloride has been found to have preferred mechanical properties - namely, greater tensile, flexural, and impact strength. It has also been found to have greater dimensional stability and less mechanical distortion in response to temperature increases.

While several presently preferred embodiments of the invention have been shown and described herein, the presently disclosed invention is not limited thereto but can be otherwise variously embodied within the scope of the following claims.

## Claims

1. A method of making an extruded shape wherein said method comprises the steps of:
blending polyvinyl chloride with glass fibers to make a polyvinyl chloride/glass melt in which the glass fibers are imbedded in the polyvinyl chloride wherein the concentration of said glass fibers is in the range of 1% to 18% by weight;
exposing the polyvinyl chloride/glass melt to a blowing agent to form voids in the polyvinyl chloride/glass melt; and
extruding the polyvinyl chloride/glass melt having included voids to form an extruded shape.

2. The method of claim 1 wherein said step of exposing the polyvinyl chloride/glass melt to a blowing agent includes combining a chemical blowing agent with polyvinyl chloride and with the glass fibers to form the feed mixture.

3. The method of claim 2 wherein the polyvinyl chloride/glass melt is contained in an extruder barrel and wherein said step of exposing the polyvinyl chloride/glass melt to a blowing agent further includes injecting a physical blowing agent through the extruder barrel into the polyvinyl chloride/glass melt.

4. A method of making an extruded shape wherein said method comprises the steps of:
combining polyvinyl chloride, glass fibers, and a blowing agent to form a feed mixture;
providing the feed mixture to an extruder, said extruder increasing the temperature and pressure on the feed mixture to form a polyvinyl chloride/glass melt wherein the concentration of said glass fibers is in the range of 1% to 18% by weight and wherein the blowing agent chemically reacts to form gases that mix with the polyvinyl chloride to form closed cells in the polyvinyl chloride; and
extruding the polyvinyl chloride/glass melt having included cells through the port of a die to form an extruded shape having a profile that corresponds to the profile of the die port.

5. The method of Claim 4 wherein the blowing agent is a chemical blowing agent that is mixed with the polyvinyl chloride and glass fibers prior to formation of the polyvinyl chloride/glass melt, said chemical blowing agent cooperating with the polyvinyl chloride/glass melt to form voids in the polyvinyl chloride/glass melt and in the extruded shape.

6. The method of Claim 5 wherein the chemical blowing agent is azodicarbonamide.

7. A method of making an extruded shape wherein said method comprises the steps of:
mixing polyvinyl chloride and glass fibers to form a feed mixture;
providing the feed mixture to an extruder that increases the temperature and pressure on the feed mixture to form a polyvinyl chloride/glass melt wherein the concentration of said glass fibers is in the range of 1 % to 18% by weight;
mixing the polyvinyl chloride/glass melt with a physical blowing agent to form cells in the polyvinyl chloride/glass melt; and
extruding the polyvinyl chloride/glass melt having included cells through the port of a die to form an extruded shape having a profile that corresponds to the profile of the die port.

8. The method of Claim 7 wherein the blowing agent that is mixed with the polyvinyl chloride/glass melt is carbon dioxide.

9. The method of Claim 7 wherein the blowing agent that is mixed with the polyvinyl chloride/glass melt is nitrogen.

10. The method of Claim 7 wherein the blowing agent that is mixed with the polyvinyl chloride/glass melt is from the chloroflorocarbon family of gases.

11. The method of Claim 7, wherein the blowing agent that is mixed with the polyvinyl chloride/glass melt is from the butane family of gases.

12. A method of making an extruded shape wherein said method comprises the steps of:
blending polyvinyl chloride with glass fibers to make a polyvinyl chloride/glass melt in which the concentration of said glass fibers in said melt is in the range of 1% to 18% by weight;
mixing the polyvinyl chloride/glass melt with a blowing agent that forms voids in the polyvinyl chloride/glass melt; and
extruding the mixture of the polyvinyl chloride/glass melt with included voids to form an extruded shape that also includes internal voids.

## Amended claims

### Amended claims in accordance with Rule 86(2) EPC.

**1.** A method of making an extruded shape wherein said method comprises the steps of:
blending polyvinyl chloride with glass fibers to make a polyvinyl chloride/glass melt in which the glass fibers are imbedded in the polyvinyl chloride wherein the concentration of said glass fibers is in the range of 1% to 18% by weight;
exposing the polyvinyl chloride/glass melt to a blowing agent to form voids in the polyvinyl chloride/glass melt; and
extruding the polyvinyl chloride/glass melt having included voids to form an extruded shape.

**2.** The method of claim 1 wherein said step of exposing the polyvinyl chloride/glass melt to a blowing agent includes combining a chemical blowing agent with polyvinyl chloride and with the glass fibers to form a feed mixture.

**3.** The method of claim 1 wherein the polyvinyl chloride/glass melt is contained in an extruder barrel and wherein said step of exposing the polyvinyl chloride/glass melt to a blowing agent further includes injecting a physical blowing agent through the extruder barrel into the polyvinyl chloride/glass melt.

**4.** The method of claim 2, wherein said step of extruding the polyvinyl chloride/glass melt includes:
increasing the temperature and pressure on the feed mixture to form a polyvinyl chloride/glass melt wherein the concentration of said glass fibers is in the range of 1% to 18% by weight and wherein the blowing agent chemically reacts to form gases that mix with the polyvinyl chloride to form closed cells in the polyvinyl chloride.

**5.** The method of claim 2, wherein said feed mixture is formed by mixing with the polyvinyl chloride and glass fibers prior to formation of the polyvinyl chloride/glass melt, and wherein said chemical blowing agent cooperates with the polyvinyl chloride/glass melt to form voids in the polyvinyl chloride/glass melt and in the extruded shape.

**6.** The method of claim 5 wherein the chemical blowing agent is azodicarbonamide.

**7.** The method of claim 3, wherein said step of blending polyvinyl chloride with glass fibers includes:
mixing polyvinyl chloride and glass fibers to form a feed mixture, and wherein said step of exposing the polyvinyl chloride/glass melt to a blowing agent includes providing the feed mixture to an extruder that increases the temperature and pressure on the feed mixture to form a polyvinyl chloride/glass melt wherein the concentration of said glass fibers is in the range of 1% to 18% by weight, wherein the extruder also mixes the polyvinyl chloride/glass melt with a physical blowing agent to form cells in the polyvinyl chloride/glass melt.

**8.** The method of claim 7 wherein the blowing agent that is mixed with the polyvinyl chloride/glass melt is carbon dioxide.

**9.** The method of claim 7, wherein the blowing agent that is mixed with the polyvinyl chloride/glass melt is nitrogen.

**10.** The method of claim 7 wherein the blowing agent that is mixed with the polyvinyl chloride/glass melt is from the chlorofluorocarbon family of gases.

**11.** The method of claim 7 wherein the blowing agent that is mixed with the polyvinyl chloride/glass melt is from the butane family of gases.

**12.** The method of claim 3 wherein the physical blowing agent cooperates with the polyvinyl chloride/glass melt to form voids in the polyvinyl chloride/glass melt and in the extruded shape.
